# EUROPÄISCHE PATENTSCHRIFT

(11) **EP 3 875 257 B1**
(45) Veröffentlichungstag und Bekanntmachung des Hinweises auf die Patenterteilung: **18.10.2023**
(21) Anmeldenummer: 21160185.1
(22) Anmeldetag: 02.03.2021
(51) Int. Cl.: B29C 70/54, B29C 70/44

(54) **AUS EINEM WELLROHR GEBILDETE HARZLEITUNG**
RESIN LINE FORMED FROM A CORRUGATED PIPE
CONDUITE POUR RÉSINE FORMÉ D'UN TUBE ONDULÉ

(30) Priorität: 02.03.2020 DE 102020105558
(43) Veröffentlichungstag der Anmeldung: 08.09.2021
(73) Patentinhaber: TWIM Holding GmbH, 49477 Ibbenbüren (DE)
(72) Erfinder: Dierkes, Dominik, 49477 Ibbenbüren (DE)
(74) Vertreter: Weeg, Thomas

(56) Entgegenhaltungen:
- CN-B- 105 196 572
- CN-U- 205 291 633
- CN-Y- 201 240 055
- DE-A1-102014 011 787
- US-A- 3 681 925
- US-A- 3 849 991
- US-A1- 2008 079 193
- US-A1- 2009 273 111
- US-A1- 2018 079 115
- US-B1- 6 257 858

## Beschreibung

Die vorliegende Erfindung bezieht sich auf eine aus einem Wellrohr gebildete Harzleitung nach dem Oberbegriff des Anspruchs 1.

Das Vakuum-Infusionsverfahren ist beispielhaft in der Schrift DE 102 39 325 B4 beschrieben. Die Harzleitung wird zur Herstellung eines Faserverbundbauteils in ein Werkzeug eingelegt, um in das Werkzeug eingelegten Verstärkungsfasern unter einem Vakuum ein flüssiges Matrixmaterial zuzuführen. Die Verstärkungsfasern können als Faserhalbzeuge als Rovings, Matten, Gelege, Gewebe, Multiaxialmaterialien, Gewirke und Geflechte vorliegen und aus den unterschiedlichsten Fasermaterialien hergestellt sein, wie beispielsweise Kohlenstofffasern, Glasfasern, Aramidfasern, Borfasern oder Hybridwerkstoffen, auch in beliebiger Kombination. Die Verstärkungsfasern werden mit dem über die Harzleitung zugeführten Matrixmaterial getränkt. Das Matrixmaterial füllt dabei auch die Werkzeugform aus. Als Matrixwerkstoffe können verschiedene geeignete Harzsysteme eingesetzt werden, die eine geeignete Viskosität im Arbeitstemperaturbereich aufweisen und sich gut mit den Verstärkungsfasern verbinden. Das Matrixmaterial härtet nach der vollständigen Durchtränkung der Verstärkungsfasern und Befüllung der Formkammer im Werkzeug aus. Danach kann das fertige Bauteil aus dem Werkzeug entnommen werden.

Eine aus einem Wellrohr gebildete Harzleitung ist aus der Schrift DE 10 2016 121 245 A1 bekannt. Durch die Wellenform der Wandung ist die Harzleitung flexibel verlegbar. Die Wandung der aus einem Wellrohr gebildeten Harzleitung weist einen über ihre Länge wellenförmig wechselnden Durchmesser auf. Die Wellen des Wellrohres schaffen eine gegenüber einer glatten Wandfläche erhöhte Steifigkeit und Tragfähigkeit in radialer Richtung des Wellrohres. In Längsrichtung kann das Wellrohr wegen der Wellenform der Wandung aber auch leicht in Biegeradien verformt werden, die das Wellrohr annehmen muss, um in ein vorgegebenes Werkzeug eingelegt werden zu können. Dadurch ist ein Wellrohr ein ideales Material, um die Steifigkeitsanforderungen unter Einwirkung des Vakuums, aber auch die Flexibilitätsanforderungen an die einfache Verlegbarkeit einer Harzleitung in einem Werkzeug erfüllen zu können. Je nach verwendetem Material kann die Wandstärke des Wellrohrs auf eine Dicke von bis zu 0,2 bis 0,4 mm reduziert sein. Das Wellrohrmaterial kann als extrudiertes Endlosmaterial auf Spindeln aufgerollt einfach gelagert und transportiert werden. Wellrohrmaterial kann von Endlosstrang in einer beliebigen Länge abgeschnitten werden. Schnittabfall wird dadurch auf ein Minimum reduziert. Üblicherweise hat ein Wellrohr eine runde Querschnittsform.

Das Wellrohr weist einzelne umfangseitig angeordnete Durchtrittsöffnungen auf, durch die das Matrixmaterial aus dem Inneren des Wellrohres nach außen treten kann. Die Durchtrittsöffnungen sind so dimensioniert und ausgeformt, dass je nach Viskosität und Fließverhalten des verwendeten Matrixmaterials und dem gewünschten Verlauf der Fließfronten innerhalb des Werkzeugs während der Tränkungsphase eine genau passende Menge des Matrixmaterials an einer jeweils gewünschten Stelle austritt. Die Durchtrittsöffnungen können im Wellental oder auf der Wellenspitze ausgebildet sein oder sich über die Länge einer oder mehrerer Wellen erstrecken. Sie sind in solchen Abständen entlang der Längsachse des Wellrohres angeordnet, dass lokal Im Bereich der Durchtrittsöffnung ein geringerer Anteil des im Wellrohr beförderten Matrixmaterials in das Werkzeug fließt und ein größerer Teil des Matrixmaterials an der Durchtrittsöffnung vorbei in Richtung des in Förderrichtung liegenden Endes der Harzleitung geleitet wird, um eine möglichst gleichmäßige Verteilung des Matrixmaterials im Werkzeug über die Länge der Harzleitung zu erreichen.

Aus der Schrift WO 2009/003476 sind auch Verteilsysteme für Matrixmaterial bekannt, bei denen die Harzleitungen eine Omega-Querschnittsform aufweisen. Die Harzleitungen werden mit den Füßen auf den Werkzeugaufbau gestellt. Das Matrixmaterial tritt durch den bodenseitigen Schlitz, der sich über die gesamte Länge der Harzleitung erstreckt, nach unten im Bereich der Füße aus dem Leitungsquerschnitt aus. Für längere Förderstrecken des Matrixmaterials im Werkzeug sind solche Harzleitungen ungeeignet, weil sie das Matrixmaterial ungleich verteilen. Während eine große Matrixmaterialmenge gleich im vorderen Abschnitt der Harzleitung in das Werkzeug läuft, kommt am entfernteren Ende der Harzleitung kaum noch Matrixmaterial an, und das im vorderen Abschnitt ausgelaufene Matrixmaterial beginnt bereits auszuhärten, während das Matrixmaterial am entfernteren Ende der Harzleitung noch gar nicht angekommen ist. Die Harzleitungen mit Omega-Querschnitt sind auch nicht besonders belastbar, da sie sich unter Einwirkung von Druck im Bereich des Längsschlitzes aufweiten und dann kollabieren.

Ein gattungsgemäßes Wellrohr ist aus der Schrift US 2018/079115 A1 bekannt. Da das dort offenbarte Wellrohr zwar eine abgeflachte Omega- Querschnittsform, aber einen geschlossenen glatten Boden aufweist, kann das Matrixmaterial nur im Bereich der Bogenform aus dem Wellrohr austreten und sich nur von dort aus im Werkzeug verteilen.

Es ist die Aufgabe der vorliegenden Erfindung, eine Harzleitung zu schaffen, die kostengünstig herstellbar ist, die den statischen Anforderungen unter Einwirkung des Vakuums genügt und die eine möglichst schnelle und gleichmäßige Verteilung des Matrixmaterials im Werkzeug begünstigt.

Die Aufgabe wir für eine gattungsgemäße Harzleitung durch die kennzeichnenden Merkmale des Anspruchs 1 gelöst,

In der Form der abgeflachten Basis befinden sich unebene Ausformungen, die auf der Außenseite des Wellrohres zumindest einen von der Durchtrittsöffnung weg weisenden Fließkanal bilden. Durch einen Fließkanal wird das Matrixmaterial von der entsprechenden Durchtrittsöffnung weg geleitet, nachdem es durch die Durchtrittsöffnung aus dem Wellrohr ausgetreten ist. Wenn das Wellrohr mit seiner Basis auf einem darunter befindlichen Material aufliegt, könnte das darunter befindliche Material die Durchtrittsöffnung verstopfen oder zumindest den Abfluss des Matrixmaterials aus dem Wellrohr behindern. Das gilt insbesondere, wenn das Wellrohr vom einwirkenden Vakuum auf das darunter befindliche Material gepresst wird. Der Fließkanal vereinfacht die Ausbreitung des Matrixmaterials im Bereich der Durchtrittsöffnung. Der Fließkanal kann bis zum seitlichen Rand der Basis reichen, um das Matrixmaterial, das durch die Durchtrittsöffnung aus dem Wellrohr ausgetreten ist, auch in einer Richtung quer zur Längserstreckung des Wellrohres in das Werkzeug einzuleiten. Es kann aber auch schon genügen, dass der Fließkanal das Matrixmaterial nur über einen Teil der Breite der Basis führt, wodurch aber die Fläche, über die das Matrixmaterial nach dem Durchtritt durch die Durchtrittsöffnung in das Werkzeug einsickern kann, bereits stark vergrößert ist. Der Fließkanal kann dabei so ausgebildet sein, dass er sich in seiner Fläche zumindest auch in eine Richtung schräg zur und/oder entlang der Längserstreckung des Wellrohres erstreckt, um eine größere Fläche zum Einsickern des Matrixmaterials in das Werkzeug abzudecken.

Durch ihre besondere Querschnittsform liegt die Harzleitung mit der abgeflachten Basis auf einer größeren Kontaktfläche auf dem darunter befindlichen Bauteil auf. Mit der größeren Kontaktfläche der abgeflachten Basis verrutscht die Harzleitung nicht so leicht bei der Verlegung. Durch die größere Kontaktfläche drückt sich die Harzleitung an ihrer Unterseite nicht so tief in das Material des Bauteils und in das Matrixmaterial ein, wenn ein Vakuum an dem Werkzeug anliegt, wenn das Werkzeug mit dem Matrixmaterial geflutet wird. Beim späteren Entformen des fertigen Bauteils kann die Harzleitung einfach von dem ausgehärteten umgebenden Matrixmaterial abgerissen werden, ohne dass dabei so deutlich sichtbare Spuren von der Harzleitung zurückbleiben wie bei einer runden Harzleitung. Der Abdruck, den die Harzleitung im Matrixmaterial hinterlässt, ist weniger tief und auffällig, als das bei einem runden Querschnitt der Harzleitung der Fall wäre.

Mit dem Merkmal der zumindest in Abschnitten der Harzleitung umlaufend geschlossenen Wandung des Wellrohrs ist gemeint, dass die Harzleitung dort zumindest keinen sich in Längsrichtung der Harzleitung erstreckenden durchgehenden Schlitz aufweist wie die Harzleitungen mit dem Omega-Leitungsquerschnitt, so dass auf die Harzleitung in diesen Abschnitten einwirkende Druck- und Zugkräfte über den Umfang der Harzleitung aufgenommen und verteilt werden. Die Harzleitung weitet sich dadurch unter Last nicht auf wie die Harzleitungen mit dem Omega-Leitungsquerschnitt und kollabieren auch nicht so schnell. Die in Abschnitten umlaufend geschlossene Wandung weist deshalb gleichwohl noch in Abständen zueinander angeordnete lokale Durchtrittsöffnungen auf, durch die Matrixmaterial aus der Harzleitung in das Werkzeug laufen kann. Die Durchtrittsöffnungen schwächen die Harzleitung aber nicht so stark wie die durchgehenden Schlitze bei den Harzleitungen mit dem Omega-Leitungsquerschnitt, weil die Harzleitung zumindest noch um die Durchtrittsöffnungen herum umlaufend geschlossen ist. Die aus dem Vakuum auf die Harzleitung einwirkende Anpresskraft kann gleichwohl über die Wellenstruktur des Wellrohres und die Bogenform der Wandung sehr gut in das darunter befindliche Material, wie beispielsweise die im Werkzeug ausgelegten Verstärkungsfasern des herzustellenden Bauteils, abgeleitet werden, ohne dass die Harzleitung dabei kollabiert oder der Harzfluss durch die Harzleitung dadurch unterbrochen oder zumindest erheblich behindert wird.

Eine Harzleitung, die die beschriebene Querschnittsform aufweist, kann auch noch leicht als Endlosmaterial auf eine Rolle aufgerollt und bei Bedarf davon wieder abgerollt und in der gewünschten Länge abgeschnitten werden. Bei Bauteillängen von beispielsweise mehr als 100 m, wie sie bei faserverstärkten Rotorblättern für Windturbinen vorkommen, ist es ein erheblicher Vorteil, Arbeitsmaterial von der Rolle zu verarbeiten, so dass es nicht erforderlich ist, viele kurze Stücke miteinander zu verbinden. Durch ihre Flexibilität entlang der Längsmittelachse kann die Harzleitung auch noch sehr gut bereichsweise oder über die volle Länge in Bögen verlaufend in einem Werkzeug verlegt werden, was die Verarbeitung zusätzlich vereinfacht.

Die Wandung des Wellrohrs besteht bevorzugt aus einem steifen Material. Das Wellrohr kann aus einem thermoplastischen Kunststoffmaterial hergestellt sein, wie beispielsweise einem Polyamid, Polyethylen, Polyvinylchlorid, Polytetrafluorethylen oder einem Polypropylen. Das verwendete Kunststoffmaterial sollte im Arbeitstemperaturbereich des Matrixmaterials zumindest zum Beginn, wenn das Matrixmaterial in das Bauteil zu fließen beginnt, noch eine ausreichende Festigkeit aufweisen, um nicht unter dem einwirkenden Vakuum im Werkzeug zu kollabieren und/oder durch die Wärme aus dem Matrixmaterial oder darin enthaltenen Lösungsmitteln so aufzuweichen oder sich zu verflüssigen, dass das Matrixmaterial nicht mehr zuverlässig im Werkzeug verteilt oder das Matrixmaterial durch das Material des Wellrohres verunreinigt wird.

Durch die bereichsweise plane Auflage der Harzleitung auf dem darunter befindlichen Material kann das Matrixmaterial direkt aus der Harzleitung in das darunter befindliche Material einsickern. Damit Matrixmaterial aus der Harzleitung in das darunter im Werkzeug befindliche Material sickert, befinden sich vorteilhaft auch im Bereich der abgeflachten Basis Durchtrittsöffnungen in der Wandung. Die Abstände der Durchtrittsöffnungen voneinander sowie die Formen, Größen, und Positionen der Durchtrittsöffnungen ergeben sich insbesondere in Abhängigkeit vom verwendeten Matrixmaterial und der Größe des Bauteilvolumens, das mit der Harzleitung mit Matrixmaterial geflutet werden soll. Auch die Viskosität und Aushärtegeschwindigkeit des verwendeten Matrixmaterials und die Förderstrecken, über die das Matrixmaterial befördert werden soll, sind für Auswahl der richtigen Anordnung der Durchtrittsöffnungen von Bedeutung. Hohlräume im Bereich der Zwickel, die sich im Bereich der seitlichen Einzüge von Harzleitungen mit runden Querschnitten zum darunter befindlichen Material befinden, ergeben sich leicht durch nicht vollständig plan an der Außenfläche der Harzleitung anliegende Abdeckplanen. Diese können durch die erfindungsgemäß gestalteten Harzleitungen vermieden werden.

Ein weiterer Vorteil der erfindungsgemäßen Harzleitungen ist darin zu sehen, dass sie durch ihre größere Breite im Verhältnis zu ihrer Höhe bei der Produktion weniger Matrixmaterial verschwenden. Um in einem Werkzeug alle Bereiche mit Matrixmaterial zu versorgen, genügt ein kleinerer Querschnitt der Harzleitungen, um das Matrixmaterial zu verteilen. Nachdem das Werkzeug vollständig mit Matrixmaterial geflutet ist, verbleibt weniger ungenutztes Volumen an Matrixmaterial in den Harzleitungen übrig, das dann mit den gebrauchten Harzleitungen entsorgt wird.

Nach einer Ausgestaltung der Erfindung weist der in Bogenform ausgebildete zweite Teil der Wandung eine zumindest annähernd oder genau halbkreisförmige Querschnittsform auf. Die Halbkreisform stellt in statischer Hinsicht ein Optimum dar, weil über diese Form die aus einem Vakuum im Werkzeug auf die Harzleitung einwirkenden Kräfte gut in das unter der Harzleitung befindliche Material übertragen werden. Die Wandung der Harzleitung kann mit vergleichsweise geringen Wandstärken ausgeführt werden, wodurch viel Kunststoffmaterial für die Harzleitungen eingespart werden kann, was den Materialaufwand und die Kosten sowie die Umweltbelastung verringert. Die Halbkreisform stellt auch einen guten Kompromiss dar zwischen einer guten Verteilung des Matrixmaterials in die seitlich neben der Harzleitung befindlichen und mit dem Matrixmaterial zu versorgenden Bereiche eines Werkzeugs und der Förderkapazität zur Durchleitung von Matrixmaterial in Erstreckungsrichtung der Harzleitung.

Nach einer Ausgestaltung der Erfindung beträgt das Verhältnis der Breite zur Höhe der Harzleitung zumindest annähernd oder genau 2 : 1. Das zumindest annähernd halbquadratische Verhältnis ermöglicht eine ausreichend hohe Durchsatzleistung der Harzleitung bei einer guten Abförderung und Ableitung des Matrixmaterials in einer Richtung quer zur Längsmittelachse der Harzleitung. Eine Harzleitung könnte beispielsweise eine Breite von 35 mm und eine Höhe von 17,5 mm aufweisen. Mit solchen Harzleitungen können Werkzeuge sehr effizient mit Matrixmaterial versorgt werden.

Nach einer Ausgestaltung der Erfindung ist die Wandung der Harzleitung aus einen Polyvinylchlorid hergestellt. Da eine Wandung aus einem Polyvinylchlorid bei einer größeren einwirkenden Wärme weich und für das Matrixmaterial durchlässig wird, kann die Wandung bei einer exothermen Reaktion des Matrixmaterials im Werkzeug wärmebedingt kollabieren. Das PVC und/oder das Matrixmaterial können so eingestellt sein, dass die exotherme Reaktion zeitlich erst beginnt, nachdem die Infusion des Matrixmaterials in das Werkzeug bereits abgeschlossen ist. Das restliche noch in der Harzleitung befindliche Matrixmaterial wird beim Kollabieren der Harzleitung aus dieser herausgedrückt. Dieses Matrixmaterial kann dadurch ungehindert in das Werkzeug fließen und noch für die Herstellung eines Bauteils genutzt werden. Die Harzleitung selbst fällt dabei in sich zusammen. Da es dann häufig nicht oder zumindest kaum mehr über die umgebende Oberfläche des Werkzeuge übersteht, verringert sich der aus dem Vakuum auf die Harzleitung einwirkende spezifische Druck. Dadurch wird die Harzleitung mit ihrer Unterseite nicht mehr so stark in die Oberfläche des Bauteils eingedrückt, so dass sich dort kaum noch eine Druckmarke der Harzleitung finden lässt, nachdem die Harzleitung nach dem Aushärten des Matrixmaterials davon entfernt worden ist.

Nach einer Ausgestaltung der Erfindung ist die Wandung aus einem Polypropylen hergestellt. Ein Polypropylen als Werkstoff ist wärmebeständiger als andere Kunststoffmaterialien, so dass die daraus hergestellte Harzleitung auch bei einer größeren Wärme im Werkzeug, wie beispielsweise aus einer exothermen Reaktion des Matrixmaterials und einer dadurch bedingten Erwärmung der Wandung, nicht kollabiert. Eine solche Materialauswahl ist vorteilhaft, wenn die Harzleitung das Matrixmaterial über eine größere Förderstrecke befördern muss und/oder eine große Menge an Wärme aus der exothermen Reaktion des Matrixmaterials anfällt und dabei die Harzleitung nicht kollabieren darf.

Weitere vorteilhafte Abwandlungen und Ausgestaltung der Erfindung lassen sich der nachfolgenden gegenständlichen Beschreibung und den Zeichnungen entnehmen.

Die Erfindung soll anhand eines Ausführungsbeispiels näher beschrieben werden. Es zeigen:
- Fig. 1:: eine Ansicht von schräg oben auf ein Wellrohr, das eine Harzleitung bildet
- Fig. 2:: eine Seitenansicht auf ein Wellrohr,
- Fig. 3:: eine Vorderansicht auf ein Wellrohr,
- Fig. 4:: eine Untersicht auf ein Wellrohr,
- Fig. 5:: eine Draufsicht auf ein Wellrohr, und
- Fig. 6:: eine Schnittansicht entlang des Schnittes A-A durch das Wellrohr.

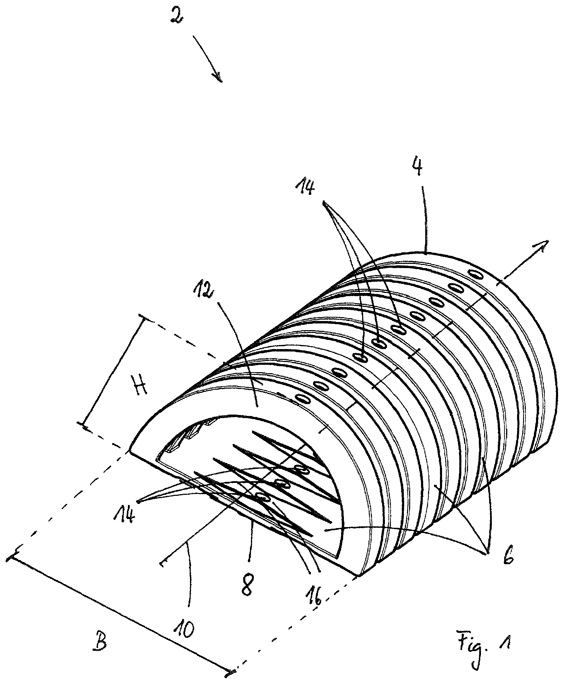

In Fig. 1 ist ein Abschnitt einer Harzleitung 2 gezeigt, die aus einem Wellrohr 4 gebildet ist. Das Wellrohr 4 hat eine Wandung aus einem Material, das in Wellen gelegt ist. Die Wellen können dabei gerundet oder - wie im Ausführungsbeispiel - mit einer eckigen Querschnittsform der Welle ausgebildet sein. Wesentlich ist, dass die Wandung 6 nicht glatt ausgebildet ist, sondern durch eine Wellenform ein Umbiegen des Wellrohres 4 ermöglicht, ohne dass sich dabei Knicke in der Wandung 6 ergeben, die den Gutfluss stören und zu Undichtigkeiten in der Wandung 6 führen können.

In der Ansicht von schräg oben ist erkennbar, dass das Wellrohr 4 quer zur Längsmittelachse 10 eine nicht rotationssymmetrische Querschnittsform aufweist, indem die Wandung 6 auf zwei Teile aufgeteilt ist. In einem ersten Teil ist die Wandung 6 entlang des Umfangs der Wandung 6 mit einer sich über die Länge des Wellrohres 4 in einer Richtung quer zur Längsmittelachse 10 erstreckenden abgeflachten Basis 8 versehen, im zweiten Teil in Umfangsrichtung ist die Wandung 6 in einer sich über die Länge des Wellrohres 4 quer zur Längsmittelachse in die Höhe H erstreckenden Bogenform 12 ausgebildet. Dabei weist die Querschnittsform mit ihrer abgeflachten Basis 8 als erstem Teil der Wandung 6 eine größere Breite B als der in der Bogenform 12 ausgeführte zweite Teil der Wandung 6 an Höhe H auf.

Die Wandung 6 des Wellrohres 4 ist zumindest in einigen Abschnitten entlang der Längsmittelachse 10 umlaufend geschlossen. In einigen Positionen finden sich allerdings Durchtrittsöffnungen 14, durch die Matrixmaterial aus dem Innenraum des Wellrohres 4 nach außen in das Werkzeug austreten kann. Im Ausführungsbeispiel findet sich eine Reihe von Durchtrittsöffnungen 14 am obersten Ende der Bogenform 12 sowie eine weitere Reihe im mittleren Bereich der Basis 8. Je nach Anwendungsfall können mehr oder weniger Durchtrittsöffnungen 14 im Wellrohr 4 ausgebildet sein, wobei die Durchtrittsöffnungen 14 auch an anderen Stellen entlang des Umfangs des Wellrohres 4 und auch mehrere Durchtrittsöffnungen 14 um den Umfang des Wellrohres 4 und in wechselnden Positionen und/oder wechselnden Abständen zueinander angeordnet sein können.

Das Matrixmaterial fließt entlang der Längsmittelachse 10 durch das Wellrohr 4 hindurch. Durch das Vakuum im Werkzeug wird das Matrixmaterial durch die Durchtrittsöffnungen 14 hindurch in das Werkzeug hineingesogen. Die Durchtrittsöffnungen 14 sind allerdings im Verhältnis zum Kanalquerschnitt des Wellrohres 4 so klein, dass an dieser Stelle nur ein Teil des durch das Wellrohr 4 hindurchfließenden Matrixmaterials in das Werkzeug gelangen kann. Der Rest des Matrixmaterialstromes, der das Wellrohr 4 durchfließt, bewegt sich weiter durch das Wellrohr 4 hindurch zu stromabwärts gelegenen weiteren Durchtrittsöffnungen 14, so dass das Matrixmaterial auch an in Fließrichtung entferntere Bereiche des Werkzeugs gelangt. Bei einer entsprechenden Verlegung des Wellrohres 4 in einem Werkzeug können mit dem Wellrohr 4 sämtliche Bereiche des Werkzeugs mit dem Matrixmaterial erreicht und geflutet werden.

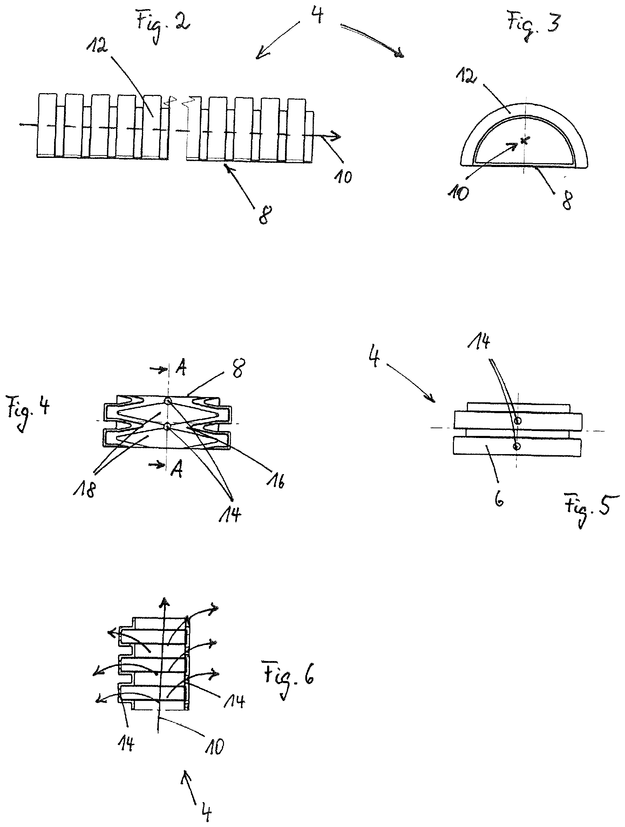

In der Fig. 2 ist das Wellrohr 4 in einer Seitenansicht gezeigt. In dieser Seitenansicht ist die Wellenstruktur gut erkennbar, in der der in Bogenform ausgeführte zweite Teil der Wandung 6 ausgeformt ist. Durch die Einkerbungen der Wandung 6 im Bereich der einzelnen Wellen ist es möglich, das Wellrohr 4 in einer Bogenform verlaufend zu verlegen, ohne dass sich dabei Knicke in der Wandung 6 des Wellrohres 4 bilden. Das Wellrohr 4 kann dadurch auch als Endlosmaterial beispielsweise auf Haspeln aufgerollt transportiert und gelagert werden. Bei der Verarbeitung kann der Endlosstrang des Wellrohres 4 von der Haspel abgezogen werden. Daraus ergibt sich eine sehr leichte Verarbeitung des Wellrohres 4 bei der Vorbereitung eines Werkzeugs für die Zuführung des Matrixmaterials.

In Fig. 3 ist eine Ansicht von vorne auf das Wellrohr 4 gezeigt. In dieser Ansicht ist gut erkennbar, dass die abgeflachte Basis 8 in diesem Ausführungsbeispiel als plane Fläche ausgebildet ist. Darüber erhebt sich in einer Halbkreisform der in der Bogenform 12 ausgebildete zweite Teil der Wandung 6.

In der Fig. 4 ist eine Ansicht von unten auf die abgeflachte Basis 8 des Wellrohres 4 dargestellt. Aus der Ansicht von unten auf die abgeflachte Basis 8 ist erkennbar, dass im Boden geringfügige Unebenheiten ausgebildet sind, durch die sich im Boden Fließkanale 16 ausbilden. In der Form der abgeflachten Basis 8 befinden sich somit unebene Ausformungen, die auf der Außenseite des Wellrohres 4 zumindest einen von der Durchtrittsöffnung 14 weg weisenden Fließkanal 16 bilden. Durch einen Fließkanal 16 wird das Matrixmaterial von der entsprechenden Durchtrittsöffnung 14 weg geleitet, nachdem es durch die Durchtrittsöffnung 14 aus dem Wellrohr 4 ausgetreten ist. Wenn das Wellrohr 4 mit seiner Basis 8 auf einem darunter befindlichen Material im Werkzeug aufliegt, könnte das darunter befindliche Material die Durchtrittsöffnung 14 verstopfen oder zumindest den Abfluss des Matrixmaterials aus dem Wellrohr 4 behindern. Der Fließkanal 16 vereinfacht die Ausbreitung des Matrixmaterials im Bereich der Durchtrittsöffnung 14. Der Fließkanal 16 kann bis zum seitlichen Rand der Basis 8 reichen, um das Matrixmaterial, das durch die Durchtrittsöffnung 14 aus dem Wellrohr 4 ausgetreten ist, auch in einer Richtung quer zur Längserstreckung des Wellrohres 4 in das Werkzeug einzuleiten. Es kann aber auch schon genügen, dass der Fließkanal 14 das Matrixmaterial nur über einen Teil der Breite der Basis 8 führt, wodurch aber die Fläche, über die das Matrixmaterial nach dem Durchtritt durch die Durchtrittsöffnung 14 in das Werkzeug einsickern kann, bereits stark vergrößert ist. Der Fließkanal 16 kann dabei so ausgebildet sein, dass er sich in seiner Fläche zumindest auch in eine Richtung schräg zur und/oder entlang der Längserstreckung des Wellrohres 4 erstreckt, um eine größere Fläche zum Einsickern des Matrixmaterials in das Werkzeug abzudecken. Teile der Bodenfläche der abgeflachten Basis 8 sind als Erhebungen 18 ausgebildet, an deren Flächen entlang das Matrixmaterial ablaufen kann. Die Erhebungen 18 bilden die Kanalwände der Fließkanäle 16. Sie müssen nicht quer zur Längsachse des Wellrohres 4 abstehend ausgebildet sein, sondern können auch in einem steileren oder flacheren Winkel angestellt sein, so dass sie eine Art Dach über einen Fließkanal 16 bilden, durch die der freie Querschnitt eines Fließkanals 16 über seine Länge unterschiedlich ausfällt.

In Fig. 5 ist eine Draufsicht auf ein Wellrohr 4 gezeigt. In der Draufsicht ist erkennbar, dass sich die Durchtrittsöffnungen 14 nur in Teilabschnitten der Wandung 6 befinden. In den zwischen den Durchtrittsöffnungen 14 befindlichen Abschnitten des Wellrohres 4 ist die Wandung 6 umlaufend geschlossen.

Aus der in Fig. 6 dargestellten Querschnittsansicht entlang der Linie A-A in Fig. 4 ist anhand der eingezeichneten Pfeile erkennbar, wie das Matrixmaterial bei seinem Durchlauf durch das Wellrohr 4 durch die Durchtrittsöffnungen 14 nach außen in das Werkzeug austritt.

In dem vorstehend beschriebenen Ausführungsbeispiel hat das Wellrohr 4 eine halbkreisförmige Querschnittsform. Abweichend von der genauen Halbkreisform kann der Querschnitt natürlich auch gestaucht oder gestreckt ausgebildet werden, wodurch sich das Höhen-/Breitenverhältnis der ersten und zweiten Teile der Wandung 6 zueinander verändert. Die Abweichungen von der Halbkreisform können sich vorteilhaft auf die Verarbeitbarkeit des Wellrohres 4 und die Verteilung des Matrixmaterials im Werkzeug auswirken.

Im Ausführungsbeispiel beträgt das Verhältnis der Breite B zur Höhe H der Harzleitung 2 : 1. Dieses Verhältnis würde sich ändern, wenn die Querschnittsform des Wellrohres entsprechend verändert würde.

Die Erfindung ist nicht auf das vorstehend beschriebene Ausführungsbeispiel beschränkt. Dem Fachmann bereitet es keine Schwierigkeiten, das Ausführungsbeispiel auf eine ihm als geeignet erscheinende Weise abzuändern, um es an die konkreten Anforderungen eines Anwendungsfalls anzupassen.

## Patentansprüche

1. Aus einem Wellrohr (4) gebildete Harzleitung (2) mit einzelnen umfangseitig angeordneten Durchtrittsöffnungen (14) in der Wandung (6), die zumindest in Abschnitten umlaufend geschlossene Wandung (6) des Wellrohrs (4) weist quer zur Längsmittelachse (10) eine nicht rotationssymmetrische Querschnittsform auf, in der die Wandung (6) in einen ersten Teil mit einer sich über die Länge des Wellrohres (4) in einer Richtung quer zur Längsmittelachse (10) erstreckenden abgeflachten Basis (8) und einen zweiten Teil mit einer sich über die Länge des Wellrohres (4) quer zur Längsmittelachse (10) in die Höhe (H) erstreckenden Bogenform (12) aufgeteilt ist, und die Querschnittsform weist mit ihrer abgeflachten Basis (8) als erstem Teil der Wandung (6) eine größere Breite (B) als der in der Bogenform (12) ausgeführte zweite Teil der Wandung (6) an Höhe (H) auf, **dadurch gekennzeichnet, dass** sich in der Form der abgeflachten Basis (8) unebene Ausformungen befinden, die auf der Außenseite des Wellrohres zumindest einen von der Durchtrittsöffnung (14) weg weisenden Fließkanal (16) bilden.

2. Harzleitung (2) nach Anspruch 1, **dadurch gekennzeichnet, dass** der in Bogenform (12) ausgebildete zweite Teil der Wandung (6) eine zumindest annähernd oder genau halbkreisförmige Querschnittsform aufweist.

3. Harzleitung (2) nach einem der vorhergehenden Ansprüche, **dadurch gekennzeichnet, dass** das Verhältnis der Breite (B) zur Höhe (H) der Harzleitung (2) zumindest annähernd oder genau 2 : 1 beträgt.

4. Harzleitung (2) nach einem der vorhergehenden Ansprüche, **dadurch gekennzeichnet, dass** die Wandung (6) aus einen Polyvinylchlorid hergestellt ist.

5. Harzleitung (2) nach einem der vorhergehenden Ansprüche, **dadurch gekennzeichnet, dass** die Wandung (6) aus einem Polypropylen hergestellt ist.

## Claims

1. Resin line (2) formed from a corrugated pipe (4) with individual through-openings (14) arranged around the circumference in the wall (6), which has a non-rotationally symmetrical cross-sectional shape transversely to the longitudinal center axis (10), at least in sections of the fully closed wall (6) of the corrugated pipe (4), in which cross-sectional shape the wall (6) is divided into a first part having a flattened base (8) extending over the length of the corrugated pipe (4) in a direction transverse to the longitudinal center axis (10), and a second part having an arcuate shape (12) extending over the length of the corrugated pipe (4) transversely to the longitudinal center axis (10) into the height (H), and the width (B) of the cross-sectional shape, with the flattened base (8) as the first part of the wall (6), is greater than the height (H) of the second part of the wall (6) formed by the arcuate shape (12), **characterized in that** in the form of the flattened base (8) uneven formations are present which form at least one flow channel (16) pointing away from the through-opening (14) on the outer side of the corrugated pipe.

2. Resin line (2) according to Claim 1, **characterized in that** the second part of the wall (6) formed in the arcuate shape (12) has an at least approximately or exactly semicircular cross-sectional shape.

3. Resin line (2) according to either of the preceding claims, **characterized in that** the ratio of the width (B) to the height (H) of the resin line (2) is at least approximately or exactly 2:1.

4. Resin line (2) according to any one of the preceding claims, **characterized in that** the wall (6) is produced from a polyvinyl chloride.

5. Resin line (2) according to any one of the preceding claims, **characterized in that** the wall (6) is produced from a polypropylene.

## Revendications

1. Conduite pour résine (2) formée à partir d'un tube ondulé (4) comportant des ouvertures de passage (14) individuelles disposées côté circonférence dans la paroi (6), la paroi (6) du tube ondulé (4), fermée sur la circonférence au moins dans certaines sections, présente une forme de section transversale sans symétrie de révolution transversalement par rapport à l'axe médian longitudinal (10), dans laquelle forme la paroi (6) est divisée en une première partie comportant une base aplatie (8) s'étendant sur la longueur du tube ondulé (4) dans une direction transversale à l'axe médian longitudinal (10) et une seconde partie comportant une forme d'arc (12) s'étendant sur la longueur du tube ondulé (4) transversalement à l'axe médian longitudinal (10) dans la hauteur (H), et la forme de section transversale présente, avec sa base aplatie (8) en tant que première partie de la paroi (6), une largeur (B) supérieure à la hauteur (H) de la seconde partie de la paroi (6) réalisée en forme d'arc (12), **caractérisée en ce que**, dans la forme de la base aplatie (8), se trouvent des formations non planes qui forment, sur le côté extérieur du tube ondulé, au moins un canal d'écoulement (16) orienté à l'opposé de l'ouverture de passage (14).

2. Conduite pour résine (2) selon la revendication 1, **caractérisée en ce que** la seconde partie de la paroi (6) réalisée en forme d'arc (12) présente une forme de section transversale au moins approximativement ou exactement semi-circulaire.

3. Conduite pour résine (2) selon l'une des revendications précédentes, **caractérisée en ce que** le rapport entre la largeur (B) et la hauteur (H) de la conduite pour résine (2) est au moins approximativement ou exactement de 2:1.

4. Conduite pour résine (2) selon l'une des revendications précédentes, **caractérisée en ce que** la paroi (6) est fabriquée à partir d'un polychlorure de vinyle.

5. Conduite pour résine (2) selon l'une des revendications précédentes, **caractérisée en ce que** la paroi (6) est fabriquée à partir d'un polypropylène.
